# EUROPÄISCHE PATENTANMELDUNG

(11) **EP 4 755 568 A1**
(43) Veröffentlichungstag der Anmeldung: **10.06.2026**
(21) Anmeldenummer: 24217456.3
(22) Anmeldetag: 04.12.2024
(51) Int. Cl.: B23K 26/38, B23K 26/70, B23K 37/04, B23K 101/18

(54) **VERFAHREN UND VORRICHTUNG ZUM BEARBEITEN EINES WERKSTÜCKS MITTELS EINES SCHNEIDSTRAHLS**

(71) Anmelder: Bystronic Laser AG, 3362 Niederönz (CH)
(72) Erfinder: Suter, Remo, 4802 Strengelbach (CH); Di Pasquale, Nino, 3012 Bern (CH)
(74) Vertreter: Fink Numrich Patentanwälte PartmbB

(57) **Zusammenfassung**

Die Erfindung betrifft Verfahren zum Bearbeiten eines Werkstücks (100) mittels eines Schneidstrahls (LS), vorzugsweise eines Laserstrahls, bei dem mittels des Schneidstrahls (LS) das Werkstück (100) auf einer Werkstückauflage (2) derart geschnitten wird, dass ein oder mehrere Werkstückteile (101) im Werkstück (100) ausgebildet werden, so dass ein erster Rand (8) eines jeweiliges Werkstückteils (101) zumindest abschnittsweise von einem zweiten Rand (10) eines Restwerkstücks (102) umgeben ist und das jeweilige Werkstückteil (101) am Restwerkstück (102) über eine oder mehrere Verbindungsabschnitte (9) gehalten wird, welche sich jeweils von einem ersten Ende (901) benachbart zum ersten Rand (8) zu einem zweite Ende (902) benachbart zum zweiten Rand (10) erstecken. Das erfindungsgemäße Verfahren zeichnet sich dadurch aus, dass der oder jeder Verbindungsabschnitt (9) durch den Schneidstrahl (LS) als Gelenkhebel geformt wird, bei dem das erste Ende (901) als ein erstes Schwenkgelenk und das zweite Ende (902) als ein zweites Schwenkgelenk fungiert, wobei am ersten Ende (901) des jeweiligen Verbindungsabschnitts (9) eine Sollbruchstelle vorgesehen ist.

## Beschreibung

Die Erfindung betrifft ein Verfahren und eine Vorrichtung zum Bearbeiten eines Werkstücks mittels eines Schneidstrahls.

Im Rahmen der Bearbeitung von Werkstücken, wie z.B. Metallblechen, ist es bekannt, mittels eines Schneidstrahls Werkstückteile mit vorbestimmten Formen und Abmessungen aus dem Werkstück auszuschneiden. Der Schneidstrahl tritt dabei aus einem Schneidkopf aus, der über das Werkstück bewegt wird. Am Schneidkopf ist in der Regel eine Schneiddüse vorgesehen, über welche ein Schneidgas der gerade bearbeiteten Stelle des Werkstücks zugeführt wird.

Das Werkstück befindet sich während der Bearbeitung mittels des Schneidstrahls auf einer Werkstückauflage, welche das Werkstück in der Regel nur an bestimmten Stellen kontaktiert. Beispielsweise kann das Werkstück auf voneinander beabstandeten Spitzen eines Lattenrosts aufliegen. Beim Schneiden von sehr kleinen Werkstückteilen besteht das Problem, dass das geschnittene Werkstückteil nicht mehr ausreichend durch die Werkstückauflage gestützt wird bzw. der Gasdruck des Schneidgases das Werkstückteil aus dem Gleichgewicht bringt. Dies kann zum Verkippen des Werkstückteils und hierdurch zu dessen Kollision mit dem Schneidkopf führen. Ferner können kleine Werkstückteile in Zwischenräumen der Werkstückauflage verklemmen bzw. durch diese hindurchfallen.

Um das Verkippen von kleinen Werkstückteilen während der Laserbearbeitung zu verhindern, ist es aus dem Stand der Technik bekannt, beim Schneidvorgang schmale Verbindungsstege zwischen dem Rand des geschnittenen Werkstückteils und dem benachbarten Rand des Restwerkstück beizubehalten.

Die Druckschrift DE 10 2022 125 140 A1 zeigt ein Verfahren zum Schneiden eines Werkstücks mittels eines Laserstrahls, bei dem ein schmaler Verbindungssteg in der Form eines sog. Nanojoints zwischen dem Werkstückteil und dem Restwerkstück ausgebildet wird. Der Nanoj oint hat dabei eine geringere Höhe als die Werkstückdicke. Zur Ausbildung des Nanojoints wird ein gepulster Laserstrahl verwendet.

Aus der Druckschrift EP 3 854 514 B1 ist ein Laserschneidverfahren bekannt, bei dem ein Werkstückteil aus dem Restwerkstück derart ausgeschnitten, dass sich vorstehende Laschen am Restwerkstück ausbilden, über welche das Werkstückteil im Restwerkstück verklemmt wird.

Das obige Verfahren, welches Werkstückteile über kleine Verbindungsstege am Restwerkstück hält, verhindert zwar das Verkippen des Werkstückteils bei der Bearbeitung mit dem Schneidstrahl. Jedoch ist nach Abschluss des Schneidvorgangs ein zusätzlicher Bearbeitungsschritt erforderlich, um die Werkstückteile vom Restwerkstück zu trennen.

Aufgabe der Erfindung ist es, ein Verfahren und eine Vorrichtung zum Bearbeiten eines Werkstücks mittels eines Schneidstrahls zu schaffen, welche ein einfaches Entfernen des geschnittenen Werkstückteils vom Restwerkstück ermöglichen.

Diese Aufgabe wird durch das Verfahren gemäß Patentanspruch 1 bzw. die Vorrichtung gemäß Patentanspruch 15 gelöst. Weiterbildungen der Erfindung sind in den abhängigen Ansprüchen definiert.

Das erfindungsgemäße Verfahren dient zum Bearbeiten eines Werkstücks mittels eines Schneidstrahls. Vorzugsweise ist der Schneidstrahl ein Laserstrahl. Das Werkstück befindet sich bei der Bearbeitung auf einer Werkstückauflage und wird mittels des Schneidstrahls derart geschnitten, dass ein oder mehrere Werkstückteile im Werkstück ausgebildet werden, so dass ein erster Rand eines jeweiligen Werkstückteils zumindest abschnittsweise von einem zweiten Rand eines Restwerkstücks umgeben ist und das jeweilige Werkstückteil am Restwerkstück über eine oder mehrere Verbindungsabschnitte gehalten wird. Der oder die Verbindungsabschnitte erstrecken sich jeweils von einem ersten Ende benachbart zum ersten Rand zu einem zweiten Ende benachbart zum zweiten Rand.

Das erfindungsgemäße Verfahren zeichnet sich dadurch aus, dass der oder jeder Verbindungsabschnitt durch den Schneidstrahl als Gelenkhebel geformt wird, bei dem das erste Ende als ein erstes Schwenkgelenk bzw. Torsionsgelenk und das zweite Ende als ein zweites Schwenkgelenk bzw. Torsionsgelenk fungiert, wobei am ersten Ende des jeweiligen Verbindungsabschnitts eine Sollbruchstelle vorgesehen ist.

Das erfindungsgemäße Verfahren weist den Vorteil auf, dass durch die Ausbildung entsprechender Schwenkgelenke an dem Verbindungsabschnitt zwischen Werkstückteil und Restwerkstück eine Relativbewegung des Werkstückteils zum Restwerkstück nach Abschluss des Schneidvorgangs ermöglicht wird. Dabei wird sichergestellt, dass beim Ausüben der Relativbewegung das Herausbrechen des Werkstückteils aus dem Restwerkstück an einer Sollbruchstelle erfolgt. Das Werkstückteil kann somit auf einfache Weise nach Abschluss des Schneidvorgangs entfernt werden. Gleichzeitig wird über den Verbindungsabschnitt zwischen Werkstückteil und Restwerkstück während der Bearbeitung des Werkstücks sichergestellt, dass das ausgeschnittene Werkstückteil im flachen Zustand nicht gegenüber dem Restwerkstück verkippt.

Vorzugsweise wird ein jeweiliger Verbindungsabschnitt durch den Schneidstrahl derart geformt, dass durch ein Anheben des jeweiligen Werkstückteils relativ zum Restwerkstück Torsionskräfte am ersten und zweiten Ende des jeweiligen Verbindungsabschnitts erzeugt werden, wobei die Sollbruchstelle am ersten Ende des jeweiligen Verbindungsabschnitts derart ausgestaltet ist, dass eine Relativbewegung des jeweiligen Werkstückteils zum Restwerkstück, welche eine Bewegung zum Anheben des jeweiligen Werkstückteils relativ zum Restwerkstück enthält, zum Bruch des oder der Verbindungsabschnitte des jeweiligen Werkstückteils an dem ersten Ende führt. Das Werkstückteil kann somit auf einfache Weise im Rahmen eines Anhebevorgangs vom Restwerkstück getrennt werden.

Das oben beschriebene Anheben des jeweiligen Werkstückteils relativ zum Restwerkstück bzw. die oben beschriebene Relativbewegung des jeweiligen Werkstückteils zum Restwerkstück sind nicht notwendigerweise Teil des erfindungsgemäßen Verfahrens, sondern sie dienen zur Definition der Eigenschaften des jeweiligen Verbindungsabschnitts zwischen Werkstückteil und Restwerkstück. Die beim Anheben des jeweiligen Werkstückteils erzeugten Torsionskräfte entstehen dadurch, dass eine Scherkraft, die auf das Werkstückteil bei dessen Anheben relativ zum Restwerkstück ausgeübt wird, zumindest teilweise in die Torsionskräfte mittels des Gelenkhebels gewandelt wird.

Das erfindungsgemäße Verfahren wird vorzugsweise zum Bearbeiten eines plattenförmigen Werkstücks verwendet, wobei das plattenförmige Werkstück insbesondere eine Dicke zwischen 0,5 mm und 5 cm aufweist. Das plattenförmige Werkstück ist vorzugweise ein Metallblech.

In einer Ausführungsform verlaufen der erste Rand des jeweiligen Werkstückteils und der zweite Rand des Restwerkstücks in dem Bereich, in dem sich ein jeweiliger Verbindungsabschnitt befindet, im Wesentlichen parallel, d.h. mit konstantem Abstand zueinander. Je nach Variante können die beiden Ränder dabei gerade und/oder gebogen bzw. gekrümmt verlaufen.

In einer weiteren bevorzugten Ausgestaltung hat das Werkstückteil, das vorzugsweise aus einem plattenförmigen Werkstück geschnitten wird, eine Fläche von höchstens 250 cm². In einer weiteren Variante hat das Werkstückteil, das vorzugsweise aus einem plattenförmigen Werkstück geschnitten wird, einen polygonförmigen ersten Rand, beispielsweise in der Form eines Rechtecks, wobei eine jeweilige Kante des polygonförmigen ersten Randes vorzugsweise eine Länge von 150 mm oder weniger aufweist.

In einer bevorzugten Ausführungsform ist ein jeweiliger Verbindungsabschnitt derart ausgestaltet, dass das erste und zweite Ende auf einer Linie liegen, die im Wesentlichen senkrecht zwischen dem ersten und zweiten Rand verläuft. Auf diese Weise wird beim Anheben des Werkstückteils dessen Translation in der Ebene und dessen Rotation verhindert.

In einer weiteren bevorzugten Variante ist das jeweilige Werkstückteil am Restwerkstück über wenigstens ein Paar von zwei Verbindungsabschnitten gehalten. Hierdurch wird ein stabiler Halt des Werkstückteils am Restwerkstück während der Bearbeitung mittels des Schneidstrahls sichergestellt. Vorzugsweise sind die zwei Verbindungsabschnitte des Paars an gegenüberliegenden Seiten des ersten Rands vorgesehen.

In einer weiteren bevorzugten Variante umfasst die oben beschriebene Relativbewegung des jeweiligen Werkstückteils zum Restwerkstück, welche eine Bewegung zum Anheben des jeweiligen Werkstückteils relativ zum Restwerkstück enthält (d.h. die Relativbewegung, die zum Bruch des oder der Verbindungsabschnitte am ersten Ende bzw. an der Sollbruchstelle führt), ausschließlich die gerade genannte Bewegung zum Anheben des jeweiligen Werkstücks relativ zum Restwerkstück. Nichtsdestotrotz ist es in einer weiteren Variante auch möglich, dass die Relativbewegung folgende Bewegungsmuster umfasst:
- ein mehrmaliges Anheben und Absenken des Werkstückteils relativ zum Restwerkstück und/oder
- eine Bewegung des Werkstückteils in einer horizontalen Ebene und/oder
- eine Verdrehung des Werkstückteils um eine vertikale Achse und/oder
- eine spiralförmige Bewegung des Werkstückteils um eine vertikale Achse.

Die obige Bewegung des Werkstückteils in einer horizontalen Ebene ist vorzugsweise eine Kreisbewegung, kann gegebenenfalls jedoch auch eine Hin- und Herbewegung sein.

In einer weiteren bevorzugten Variante übt die oben beschriebene Bewegung zum Anheben des jeweiligen Werkstückteils relativ zum Restwerkstück, welche in der Relativbewegung des jeweiligen Werkstückteils zum Restwerkstück enthalten ist, eine maximale Kraft auf das Werkstückteil aus, die geringer als die Gewichtskraft des Restwerkstücks ist. In diesem Fall kann gegebenenfalls darauf verzichtet werden, das Restwerkstück beim Anheben des Werkstückteils niederzudrücken. Nichtsdestotrotz ist es in einer weiteren bevorzugten Ausführungsform auch möglich, dass das Restwerkstück bei der Bewegung zum Anheben des jeweiligen Werkstückteils relativ zum Restwerkstück, welche in der Relativbewegung des jeweiligen Werkstückteils zum Restwerkstück enthalten ist, und vorzugweise während der gesamten Relativbewegung des jeweiligen Werkstückteils zum Restwerkstück niedergedrückt wird.

In einer weiteren bevorzugten Ausgestaltung ist am ersten Ende des jeweiligen Verbindungsabschnitts ein erster Steg und am zweiten Ende des jeweiligen Verbindungsabschnitts ein zweiter Steg ausgebildet. Der erste und zweite Steg können durch ein Anheben des Werkstückteils relativ zum Restwerkstück verdreht werden. Mit solchen Stegen kann auf sehr einfache Weise das erste und zweite Schwenkgelenk am Verbindungsabschnitt ausgebildet werden.

In einer bevorzugten Variante weist der erste Steg eine Ausdehnung in der Erstreckungsrichtung des ersten und zweiten Rands auf, welche geringer ist als die Ausdehnung des zweiten Stegs in Erstreckungsrichtung des ersten und zweiten Rands. Alternativ oder zusätzlich weist der erste Steg ferner eine Dicke in Richtung senkrecht zur Werkstückauflage auf, welche geringer ist als die Dicke des zweiten Stegs und/oder des Werkstücks in Richtung senkrecht zur Werkstückauflage.

Um die Ausbildung der Sollbruchstelle am ersten Ende des jeweiligen Verbindungsabschnitts zu gewährleisten, kann der erste Steg z.B. als Nanojoint ausgebildet sein, der in der oben genannten Druckschrift DE 10 2022 125 140 A1 beschrieben ist. Gegebenenfalls kann auch der zweite Steg als Nanojoint ausgebildet sein. In diesem Fall unterscheiden sich die Eigenschaften des Nanojoints des zweiten Stegs von den Eigenschaften des Nanojoints des ersten Stegs derart, dass die Sollbruchstelle am ersten Steg erhalten bleibt. Beispielsweise kann der Nanojoint des ersten Stegs eine geringere Dicke als der Nanojoint des zweiten Stegs aufweisen.

In einer weiteren bevorzugten Ausgestaltung wird der oder jeder Verbindungsabschnitt als Kniegelenkhebel geformt, der wenigstens zwei, über einen Verbindungssteg miteinander verbundene Brückenstege umfasst, welche sich entlang des ersten und zweiten Rands von jeweiligen ersten, vorzugsweise miteinander fluchtenden Brückenstegenden zu jeweiligen zweiten, vorzugsweise miteinander fluchtenden Brückenstegenden erstrecken. Dabei befindet sich an dem ersten Brückenstegende des Brückenstegs, der benachbart zum ersten Rand ist, das erste Ende des jeweiligen Verbindungsabschnitts, wohingegen sich an dem ersten Brückenstegende des Brückenstegs, der benachbart zum zweiten Rand ist, das zweite Ende des jeweiligen Verbindungsabschnitts befindet. Durch die Ausbildung des Verbindungsabschnitts als Kniegelenkhebel kann das Werkstückteil einfach durch einen Anhebevorgang vom Restwerkstück entfernt werden, ohne dass das Werkstückteil eine Translation in der Ebene und eine Rotation durchführt. Der Verbindungssteg, der die Brückenstege miteinander verbindet, kann in einer bevorzugten Variante als Nanojoint ausgebildet sein.

In einer bevorzugten Variante befindet sich zwischen zweiten Brückenstegenden von zumindest einem Paar von benachbarten Brückenstegen ein Verbindungssteg, welcher durch ein Anheben des Werkstückteils relativ zum Restwerkstück verdreht werden kann.

In einer weiteren bevorzugten Ausführungsform umfasst ein jeweiliger Verbindungsabschnitt ausschließlich zwei Brückenstege. Hierdurch wird ein einfacher Aufbau des als Kniegelenkhebel ausgebildeten Verbindungsabschnitts erreicht.

In einer weiteren bevorzugten Variante weisen die Brückenstege jeweils eine Länge in Erstreckungsrichtung des ersten und zweiten Rands auf, welche der Dicke des Werkstücks in Richtung senkrecht zur Werkstückauflage multipliziert mit einem Faktor zwischen 1 und 20 entspricht. Alternativ oder zusätzlich können die Brückenstege jeweils eine Breite in Richtung senkrecht zur Erstreckungsrichtung des ersten und zweiten Rands aufweisen, welche der Dicke des Werkstücks in Richtung senkrecht zur Werkstückauflage multipliziert mit einem Faktor zwischen 0,1 und 5 entspricht. Mit diesen Abmessungen wird die Funktion des Kniegelenkhebels sehr gut umgesetzt.

Anstatt einen entsprechenden Verbindungsabschnitt als Kniegelenkhebel auszubilden, kann in einer weiteren Variante der oder jeder Verbindungsabschnitt auch als einfacher Gelenkhebel geformt werden. Dieser einfache Gelenkhebel umfasst einen einzelnen Brückensteg, welcher sich entlang des ersten und zweiten Rands von einem ersten Brückenstegende benachbart zum ersten Rand zu einem zweiten Brückenstegende benachbart zum zweiten Rand erstreckt, wobei sich an dem ersten Brückenstegende das erste Ende des jeweiligen Verbindungsabschnitts befindet und wobei sich an dem zweiten Brückenstegende das zweite Ende des jeweiligen Verbindungsabschnitts befindet.

In einer weiteren bevorzugten Variante wird das jeweilige Werkstückteil über einen einzelnen Verbindungsabschnitt am Restwerkstück gehalten, wobei der Schneidstrahl in einem kontinuierlichen Schneidvorgang zunächst einen Teil der Kontur des Verbindungsabschnitts, anschließend die Kontur des jeweiligen Werkstückteils und darauffolgend die verbleibende Kontur des Verbindungsabschnitt schneidet. Hierdurch kann ohne Unterbrechung des Schneidvorgangs sowohl der Verbindungsabschnitt als auch das Werkstückteil geschnitten werden.

In einer weiteren bevorzugten Ausgestaltung wird der jeweilige Verbindungsabschnitt freigeschnitten, so dass Bereiche des Werkstücks in der Umgebung des jeweiligen Verbindungsabschnitts entfernt werden. Hierdurch wird die Beweglichkeit des jeweiligen Verbindungsabschnitts erhöht.

In einer weiteren bevorzugten Ausführungsform wird das jeweilige Werkstückteil mittels eines automatisierten Greifers gegriffen, der anschließend eine Relativbewegung des jeweiligen Werkstückteils zum Restwerkstück ausführt, welche eine Bewegung zum Anheben des jeweiligen Werkstückteils relativ zum Restwerkstück enthält und zum Bruch des oder der Verbindungsabschnitte des jeweiligen Werkstückteils an dem ersten Ende führt. Nach dem Bruch des oder der Verbindungsabschnitte des jeweiligen Werkstückteils an dem ersten Ende sortiert der automatisierte Greifer das jeweilige Werkstückteil ab. In dieser Variante wird der Schneidvorgang des erfindungsgemäßen Verfahrens effizient mit dem Vorgang des Absortierens des oder der geschnittenen Werkstückteile kombiniert. Beim Greifen des jeweiligen Werkstückteils durch den automatisierten Greifer muss sich das Werkstück nicht zwangsläufig noch auf der Werkstückauflage befinden, sondern es kann zuvor auf eine separate Auflage transportiert worden sein.

In einer weiteren bevorzugten Variante wird mit einer Detektionseinrichtung der Bruch des oder der Verbindungsabschnitte des jeweiligen Werkstückteils an dem ersten Ende (d.h. an der Sollbruchstelle) detektiert, woraufhin der Greifer das jeweilige Werkstückteil absortiert. Hierdurch wird sichergestellt, dass das jeweilige Werkstückteil beim Absortieren auch tatsächlich vom Restwerkstück getrennt ist.

Die oben beschriebene Detektionseinrichtung kann den Bruch des oder der Verbindungsabschnitte des jeweiligen Werkstückteils an dem ersten Ende auf unterschiedliche Weise erfassen. Beispielsweise kann der Bruch über eine Messung eines elektrischen Stroms oder einer elektrischen Spannung zwischen dem jeweiligen Werkstückteil und dem Restwerkstück und/oder über eine Kraftmessung am automatisierten Greifer und/oder über eine kapazitive Messung und/oder über eine induktive Messung und/oder über eine optische Messung detektiert werden.

Neben dem oben beschriebenen Verfahren betrifft die Erfindung eine Vorrichtung zum Bearbeiten eines Werkstücks mittels eines Schneidstrahls, vorzugsweise eines Laserstrahls, wobei die Vorrichtung einen Schneidkopf zur Formung des Schneidstrahls umfasst, um das Werkstück auf einer Werkstückauflage mittels des Schneidstrahls zu schneiden. Die Vorrichtung ist dabei zur Durchführung des erfindungsgemäßen Verfahrens bzw. ein oder mehrerer bevorzugten Varianten des erfindungsgemäßen Verfahrens eingerichtet.

Ausführungsbeispiele der Erfindung werden nachfolgend anhand der beigefügten Figuren detailliert beschrieben.

Es zeigen:
- Fig. 1: eine perspektivische Darstellung einer Ausführungsform einer erfindungsgemäßen Vorrichtung zum Bearbeiten eines Werkstücks;
- Fig. 2: eine Draufsicht auf ein Werkstückteil, das mit der Vorrichtung der Fig. 1 gemäß einer ersten Variante der Erfindung geschnitten wurde;
- Fig. 3: eine Seitenansicht des Werkstückteils aus Fig. 2, welche das Entfernen des Werkstückteils von dem Restwerkstück mittels eines Greifers verdeutlicht;
- Fig. 4: eine Draufsicht auf ein Werkstückteil, das mit der Vorrichtung der Fig. 1 gemäß einer zweiten Variante des erfindungsgemäßen Verfahrens geschnitten wurde; und
- Fig. 5: eine Draufsicht auf ein Werkstückteil, das mit der Vorrichtung der Fig. 1 gemäß einer dritten Variante des erfindungsgemäßen Verfahrens geschnitten wurde.

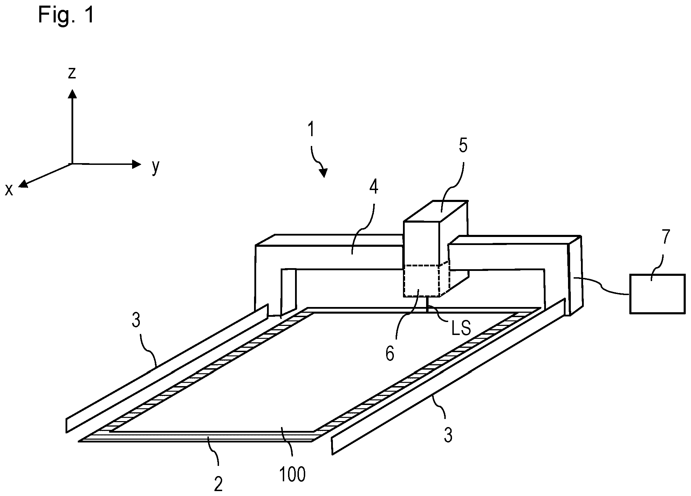

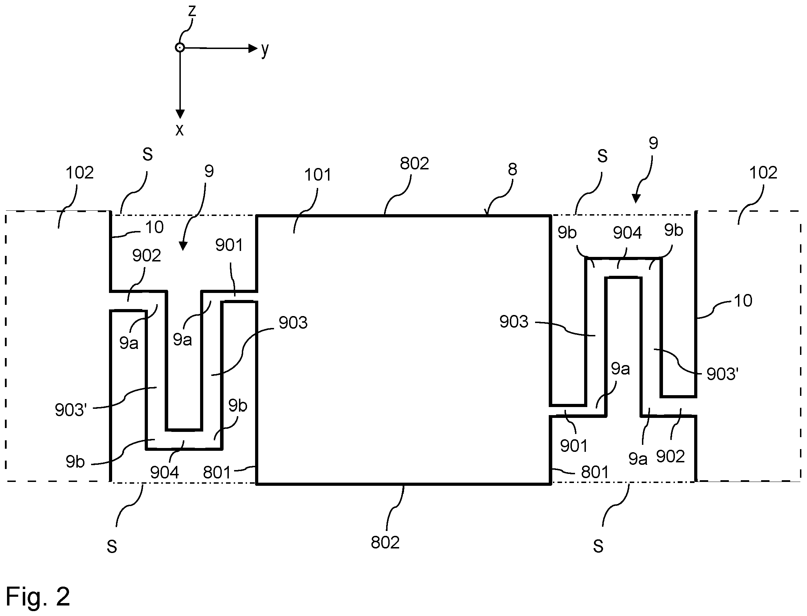

Fig. 1 zeigt eine schematische Ansicht einer Ausführungsform einer erfindungsgemäßen Vorrichtung 1 zum Bearbeiten eines Werkstücks 100 in der Form eines Metallblechs. Die Vorrichtung 1 ist eine Laserbearbeitungsmaschine, die zum Schneiden des Werkstücks 100 einen Schneidstahl LS in der Form eines Laserstrahls nutzt. In Fig. 1 und auch in den nachfolgenden Figuren 2 bis 5 werden durch ein kartesisches Koordinatensystem aus x-Achse, y-Achse und z-Achse entsprechende Raumrichtungen angedeutet. Die x-Achse ist die horizontale Längsrichtung der Vorrichtung 1, die y-Achse ist die horizontale Querrichtung der Vorrichtung 1 und die z-Achse repräsentiert die Höhenrichtung.

Gemäß Fig. 1 befindet sich das zu bearbeitende Werkstück 100 auf einer Werkstückauflage 2 in der Form eines Lattenrosts. Die Latten des Lattenrosts weisen nach oben gerichtete Spitzen bzw. Kanten auf, auf denen das Werkstück 100 aufliegt. Das Werkstück 100 wird zur Durchführung des Schneidvorgangs über die bewegbare Werkstückauflage 2 in die Vorrichtung 1 hineinbewegt und anschließend nach Abschluss des Schneidvorgangs über die bewegbare Werkstückauflage 2 aus der Vorrichtung 1 hinausbewegt. Die Vorrichtung 1 umfasst eine Brücke 4, die sich in der y-Richtung über die Werkstückauflage 2 bzw. das Werkstück 100 erstreckt und auf parallel verlaufenden Führungen 3 entlang der x-Achse bewegbar ist. Auf der Brücke 4 befindet sich ein entsprechender Schneidwagen 5, der in y-Richtung entlang der Brücke verfahrbar ist und einen Schneidkopf 6 enthält, über den der Schneidstrahl LS hin zum Werkstück 100 nach unten austritt. Über die Bewegung der Brücke 4 entlang der x-Richtung und das Verfahren des Schneidwagens 5 entlang der y-Richtung kann der Schneidstrahl LS über das Werkstück 100 bewegt werden und hierdurch das Ausschneiden von unterschiedlichen Werkstückteilen auf dem Werkstück 100 bewirken. Die Vorrichtung 1 wird hierzu in geeigneter Weise durch eine Steuereinrichtung 7 gesteuert.

Ziel der hier beschriebenen Ausführungsformen ist es, kleine Werkstückteile aus dem Werkstück 100 auszuschneiden und gleichzeitig zu gewährleisten, dass die Werkstückteile beim Schneidvorgang flach auf der Werkstückauflage 2 liegen bleiben und nach dem Schneidvorgang durch ein einfaches Anheben vom Restwerkstück entfernt werden können.

Fig. 2 zeigt ein Werkstückteil 101, das gemäß einer ersten Variante des erfindungsgemäßen Verfahrens mit der Vorrichtung 1 aus dem Werkstück 100 geschnitten wurde. Das Werkstückteil 101 umfasst einen ersten Rand 8, der im hier beschriebenen Beispiel quadratisch ausgestaltet ist. Der erste Rand 8 weist zwei Kanten 801 auf, die parallel zur x-Richtung verlaufen, sowie zwei Kanten 802, die parallel zur y-Richtung verlaufen. Aus Fig. 2 ist ferner ausschnittsweise das entsprechende Restwerkstück 102 ersichtlich, aus dem das Werkstückteil 101 ausgeschnitten wurde. Dabei ist auch ausschnittsweise ein zweiter Rand 10 des Restwerkstücks 101 ersichtlich. Dieser zweite Rand 10 liegt benachbart zu den jeweiligen Kanten 801 des ersten Rand 8 des Werkstückteils 101.

Wie sich aus Fig. 2 ergibt, wird das Werkstückteil 101 im Rahmen der Bearbeitung mit dem Schneidstrahl LS nicht komplett aus dem Restwerkstück 102 herausgeschnitten. Vielmehr verbleiben zwei Verbindungsabschnitte 9 zwischen jeder Kante 801 des ersten Rands 8 und des gegenüberliegenden Abschnitts des zweiten Rands 10. Mit anderen Worten befindet sich in Fig. 2 ein linker Verbindungsabschnitt 9 benachbart zur linken Kante 801 des ersten Rands 8 und ein rechter Verbindungsabschnitt 9 benachbart zur rechten Kante 801 des ersten Rands 8.

In der Ausführungsform der Fig. 2 sind die jeweiligen Verbindungsabschnitte 9 als Kniegelenkhebel ausgestaltet. Jeder Kniegelenkhebel umfasst ein erstes Ende 901 in der Form eines ersten Stegs, der mit einer entsprechenden Kante 801 des ersten Rands 8 verbunden ist. Die ersten Enden 901 des rechten und linken Verbindungsabschnitts 9 sind in x-Richtung versetzt zueinander angeordnet. An das erste Ende 901 jedes Verbindungsabschnitts 9 schließt sich ein Brückensteg 903 an, der sich entlang der x-Richtung erstreckt. Die Brückenstege 903 der beiden Verbindungsabschnitte 9 erstrecken sich jeweils zwischen einem ersten Brückenstegende 9a und einem zweiten Brückenstegende 9b. An das zweite Brückenstegende 9b jedes Verbindungsabschnitts 9 schließt sich ein Verbindungssteg 904 an, der in Richtung hin zum entsprechenden zweiten Rand 10 entlang der y-Achse verläuft.

Jeder Verbindungsabschnitt 9 weist ein zweites Ende 902 in der Form eines zweiten Stegs auf, der sich in x-Richtung an der gleichen Position wie das erste Ende 901 des Verbindungsabschnitts 9 befindet. Das zweite Ende 902 ist mit der benachbarten zweiten Kante 10 des Restwerkstücks 102 verbunden. An das zweite Ende 902 schließt sich auf dessen Seite entgegengesetzt zum Restwerkstück 102 ein weiterer Brückensteg 903' mit einem ersten Brückenstegende 9a an. Dieser Brückensteg 903' erstreckt sich entlang der x-Richtung bis zu seinem zweiten Ende 9b, das am Verbindungssteg 904 endet. Der erste Steg bzw. das erste Ende 901 jedes Verbindungsabschnitts 9 ist schmäler ausgestaltet als der zweite Steg bzw. das zweite Ende 902 des jeweiligen Verbindungsabschnitts 9. Auf diese Weise wird erreicht, dass das erste Ende 901 eine Sollbruchstelle bildet, wenn das Werkstückteil 101 nach oben entlang der z-Richtung angehoben wird, wie weiter unten noch näher erläutert wird.

Beim Schneiden der Kontur eines jeweiligen Verbindungsabschnitts 9 wird in einer bevorzugten Ausführungsform sichergestellt, dass der jeweilige Verbindungsabschnitt 9 freigeschnitten wird, so dass Bereiche des Werkstücks 100 in der Umgebung des Verbindungsabschnitts 9 entfernt werden. Dies kann durch einen Schnitt entlang der Schnittlinien S erreicht werden, welche in Fig. 2 strichpunktiert angedeutet sind. Durch diesen Freischnitt wird die Bewegungsfreiheit des jeweiligen Verbindungsabschnitts 9 in der x-y-Ebene erhöht.

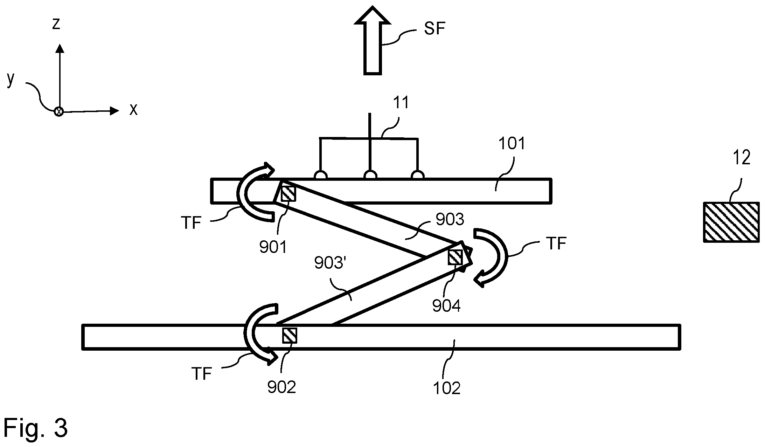

Nachdem entsprechende Werkstückteile 101 aus dem Werkstück 100 geschnitten wurden, müssen diese Werkstückteile 101 vom Restwerkstück 102 getrennt und absortiert werden. Dies wird in der hier beschriebenen Ausführungsform mittels eines Greifers durchgeführt, wie in Fig. 3 verdeutlicht ist.

Fig. 3 zeigt eine Seitenansicht der Bauteile aus Fig. 2 entlang der y-Richtung, wobei der Vorgang des Entfernens des Werkstückteils 101 vom Restwerkstück 102 dargestellt ist. In Fig. 3 erkennt man einen Greifer 11, der das entsprechende Werkstückteil 101 greift und nach oben bewegt. Der Greifer kann z.B. ein Sauggreifer oder ein magnetischer Greifer sein. Durch die Bewegung des Werkstückteils 101 nach oben wird auf dieses eine Scherkraft SF ausgeübt. Diese Scherkraft SF wird in Torsionskräfte TF an dem ersten Ende 901, dem Verbindungssteg 904 und dem zweiten Ende 902 der jeweiligen Verbindungsabschnitte 9 gewandelt, wie durch gebogene Pfeile angedeutet ist. Die Torsionskräfte verdrehen das erste Ende 901, den Verbindungssteg 904 und das zweite Ende 902. Das erste Ende 901, das zweite Ende 902 sowie der Verbindungssteg 904 fungieren somit als Drehpunkte, wobei der Verbindungssteg 904 ein Kniegelenk darstellt.

Wie bereits erwähnt, ist das erste Ende 901 als Sollbruchstelle ausgestaltet. Dies hat zur Folge, dass es bei einer bestimmten Höhe, um die das Werkstückteil 101 relativ zum Restwerkstück 102 nach oben bewegt wurde, zum Abriss der Werkstückteils 101 am ersten Ende 901 auf beiden Seiten des Werkstückteils 101 kommt. Das Werkstückteil 101 wird somit mittels des Greifers 11 nicht nur angehoben, sondern auch vom Restwerkstück 102 getrennt. Demzufolge kann der Greifer 11 das Werkstückteil 101 nach Trennung vom Restwerkstück 102 absortieren, d.h. hin zu einer Aufbewahrungsposition transportieren. Anschließend kann der Greifer ein weiteres Werkstückteil 101 aus dem Restwerkstück 102 entfernen und absortieren.

In der hier beschriebenen Ausführungsform wird der Bruch an der Sollbruchstelle rein durch das Anheben des Werkstückteils 101 bewirkt. Nichtsdestotrotz kann der Abriss an der Sollbruchstelle gegebenenfalls auch erst mit zusätzlichen Bewegungen des Greifers 11 bewirkt werden, z.B. durch eine Auf- und Abbewegung des Greifers 11 und/oder durch eine Bewegung des Greifers 11 in einer horizontalen Ebene, z.B. in der Form einer Rotation um die Greiferachse.

In Fig. 3 ist ferner schematisch eine Detektionseinrichtung 12 angedeutet. Mit dieser Detektionseinrichtung 12 wird detektiert, wenn es zum Abriss des Werkstückteils 101 an der Sollbruchstelle kommt. Der Greifer 11 wird dabei derart angesteuert, dass er erst bei Detektion des Abrisses mit dem Absortieren des Werkstückteils 101 beginnt. Die Detektionseinrichtung 12 kann auf unterschiedlichen Technologien beruhen. Zum Beispiel kann der Abriss über die Messung von elektrischem Strom bzw. elektrischer Spannung zwischen Werkstückteil 101 und Restwerkstück 102 und/oder über eine Kraftmessung am Greifer 11 und/oder über eine kapazitive Messung und/oder über eine induktive Messung und/oder über eine optische Messung erfasst werden, wie bereits oben erläutert wurde.

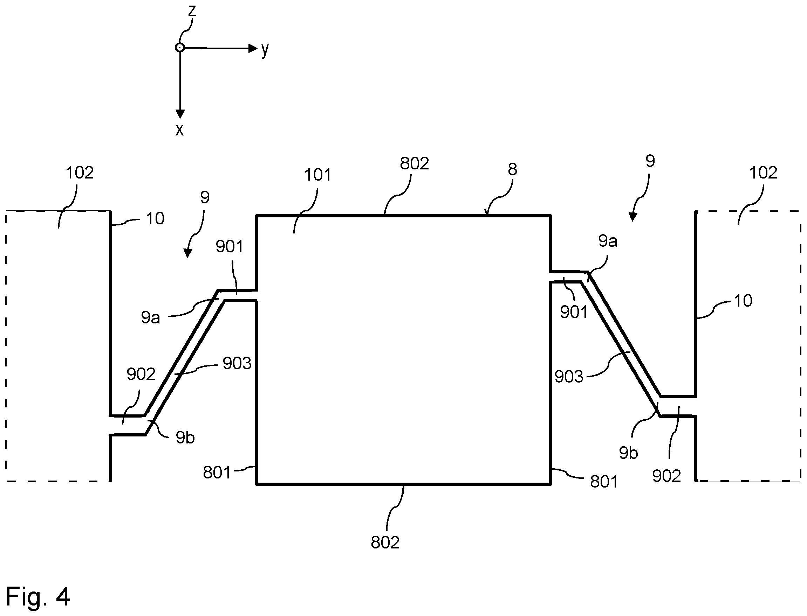

Fig. 4 zeigt eine Draufsicht analog zu Fig. 2, wobei das Werkstückteil 101 basierend auf einer zweiten Variante des erfindungsgemäßen Verfahrens geschnitten wurde. Der Aufbau des Werkstückteils 101 und des Restwerkstücks 102 entspricht der Ausführungsform der Fig. 2 und wird deshalb nicht nochmals im Detail erläutert.

Der Unterschied der Fig. 4 im Vergleich zur Fig. 2 besteht darin, dass die beiden Verbindungsabschnitte 9 auf der linken und rechten Seite des Werkstückteils 101 anders aufgebaut sind. Im Besonderen ist jeder Verbindungsabschnitt 9 nicht mehr als Kniegelenkhebel, sondern als einfacher Gelenkhebel ausgestaltet, der lediglich einen einzelnen, schräg verlaufenden Brückensteg 903 umfasst. Anstatt schräg zu verlaufen, kann sich der Brückensteg 903 auch parallel zu den Rändern 801 und 10 erstrecken Der Brückensteg 903 jedes Verbindungsabschnitts 9 erstreckt sich von einem ersten Steg bzw. ersten Ende 901 des Verbindungsabschnitts 9 zu einem zweiten Steg bzw. zweiten Ende 902 des Verbindungsabschnitts 9. Das erste Ende 901 ist mit einer entsprechenden Kante 801 des Rands 8 des Werkstückteils verbunden. Das zweite Ende 902 ist mit einem entsprechenden Rand 10 des Restwerkstücks 102 verbunden. Am ersten Ende 901 befindet sich ein erstes Brückenstegende 9a des Brückenstegs 903. Von dort läuft ein jeweiliger Brückensteg 903 schräg hin zu einem zweiten Brückenstegende 9b, an das sich das zweite Ende 902 anschließt.

Analog zu Fig. 2 verursacht auch in der Ausführungsform der Fig. 4 das Anheben des Werkstückteils 101 mit einem entsprechenden Greifer 11 eine Scherkraft SF, die an dem ersten Ende 901 und dem zweiten Ende 902 der beiden Verbindungsabschnitte 9 zu Torsionskräften und einer damit verbundenen Drehung führt. Dabei ist das erste Ende 901 wieder schmäler ausgestaltet als das zweite Ende 902, so dass das erste Ende 901 als Sollbruchstelle fungiert, die beim Anheben des Werkstückteils 101 bricht, woraufhin das vom Restwerkstück 102 getrennte Werkstückteil 101 absortiert werden kann.

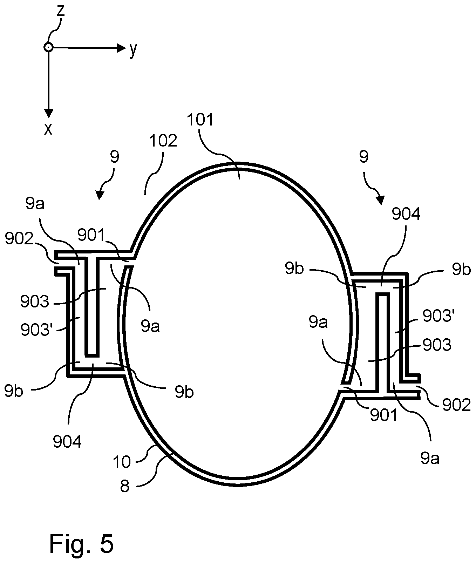

Fig. 5 zeigt eine weitere Draufsicht auf ein Werkstückteil, das gemäß einer dritten Variante des erfindungsgemäßen Verfahrens geschnitten wurde. Bauteile aus Fig. 5, welche Bauteilen der Fig. 2 entsprechen, sind mit den gleichen Bezugszeichen bezeichnet. Der Unterschied der Fig. 5 gegenüber der Fig. 2 besteht darin, dass das Werkstückteil 101 auf der Seite eine gebogene Randgeometrie aufweist, d.h. der Zwischenraum zwischen Werkstückteil 101 und Restwerkstück 102 hat auf dieser Seite eine gebogene Form. Ansonsten sind analog zur Ausführungsform der Fig. 2 wiederum Verbindungsabschnitte 9 zwischen Werkstückteil 101 und Restwerkstück 102 ausgebildet, die als Kniegelenkhebel mit Sollbruchstelle am entsprechenden ersten Ende 901 fungieren. Es wird somit auch in dieser Ausführungsform der Effekt erreicht, dass das Werkstückteils 101 beim Anheben mittels des Greifers 11 vom Restwerkstück 102 an der Sollbruchstelle bzw. am ersten Ende 901 abreißt. Ein weiterer Unterschied der Ausführungsform der Fig. 5 gegenüber der Ausführungsform der Fig. 2 besteht darin, dass die Brückenstege 903, 903' und der Verbindungssteg 904 eine andere Form als die Verbindungsstege 903, 903' und der Verbindungssteg 904 der Fig. 2 aufweisen.

Die im Vorangegangenen beschriebenen Ausführungsformen der Erfindung weisen eine Reihe von Vorteilen auf. Insbesondere werden mittels eines Schneidstrahls Werkstückteile derart aus einem Werkstück geschnitten, dass diese während der Bearbeitung mittels des Schneidstrahls nicht verkippen, sich nicht verschieben und auch nicht zwischen Latten der Werkstückauflage herunterfallen. Darüber hinaus wird sichergestellt, dass nach dem Schneidvorgang das Werkstückteil auf einfache Weise im Rahmen eines Abhebevorgangs vom Restwerkstück getrennt werden kann. Dies wird über geeignete Verbindungsabschnitte erreicht, die als Gelenkhebel mit einer Sollbruchstelle benachbart zum Werkstückteil fungiert. Die Verdrehung des Gelenkhebels bei Anheben des Werkstückteils vom Restwerkstück führt dabei zu Torsionskräften, die einen Bruch an der Sollbruchstelle bewirken. Nach dem Bruch an der Sollbruchstelle kann das entsprechende Werkstückteil absortiert werden.

### Bezugszeichenliste

1 Vorrichtung zum Bearbeiten eines Werkstücks (Laserbearbeitungsmaschine)
100 Werkstück
101 Werkstückteil
102 Restwerkstück
2 Werkstückauflage
3 Führungen
4 Brücke
5 Schneidwagen
6 Schneidkopf
7 Steuereinrichtung
LS Schneidstrahl
8 erster Rand
801, 802 Kanten des ersten Rands
9 Verbindungsabschnitt
901 erstes Ende des Verbindungsabschnitts (erster Steg)
902 zweites Ende des Verbindungsabschnitts (zweiter Steg)
903,903' Brückenstege
904 Verbindungssteg
9a erste Brückenstegenden
9b zweite Brückenstegenden
10 zweiter Rand
S Schnittlinien zum Freischneiden des Verbindungsabschnitts
11 Greifer
12 Detektionseinrichtung
SF Scherkraft
TF Torsionskräfte
x, y, z Raumrichtungen

## Patentansprüche

1. Verfahren zum Bearbeiten eines Werkstücks (100) mittels eines Schneidstrahls (LS), vorzugsweise eines Laserstrahls, bei dem mittels des Schneidstrahls (LS) das Werkstück (100) auf einer Werkstückauflage (2) derart geschnitten wird, dass ein oder mehrere Werkstückteile (101) im Werkstück (100) ausgebildet werden, so dass ein erster Rand (8) eines jeweiliges Werkstückteils (101) zumindest abschnittsweise von einem zweiten Rand (10) eines Restwerkstücks (102) umgeben ist und das jeweilige Werkstückteil (101) am Restwerkstück (102) über eine oder mehrere Verbindungsabschnitte (9) gehalten wird, welche sich jeweils von einem ersten Ende (901) benachbart zum ersten Rand (8) zu einem zweite Ende (902) benachbart zum zweiten Rand (10) erstecken, **dadurch gekennzeichnet, dass**
der oder jeder Verbindungsabschnitt (9) durch den Schneidstrahl (LS) als Gelenkhebel geformt wird, bei dem das erste Ende (901) als ein erstes Schwenkgelenk und das zweite Ende (902) als ein zweites Schwenkgelenk fungiert, wobei am ersten Ende (901) des jeweiligen Verbindungsabschnitts (9) eine Sollbruchstelle vorgesehen ist.

2. Verfahren nach Anspruch 1, **dadurch gekennzeichnet, dass** ein jeweiliger Verbindungsabschnitt (9) derart ausgestaltet ist, dass das erste und zweite Ende (901, 902) auf einer Linie liegen, die im Wesentlichen senkrecht zwischen dem ersten und zweiten Rand (8, 10) verläuft.

3. Verfahren nach Anspruch 1 oder 2, **dadurch gekennzeichnet, dass** das jeweilige Werkstückteil (101) am Restwerkstück (102) über wenigstens ein Paar von zwei Verbindungsabschnitten (9) gehalten wird, welche vorzugsweise an gegenüberliegenden Seiten des ersten Rands (8) vorgesehen sind.

4. Verfahren nach einem der vorhergehenden Ansprüche, **dadurch gekennzeichnet, dass** am ersten Ende (901) des jeweiligen Verbindungsabschnitts (9) ein erster Steg ausgebildet ist und am zweiten Ende (902) des jeweiligen Verbindungabschnitts (9) ein zweiter Steg ausgebildet ist, wobei der erste und zweite Steg durch ein Anheben des Werkstückteils (101) relativ zum Restwerkstück (102) verdreht werden können.

5. Verfahren nach Anspruch 4, **dadurch gekennzeichnet, dass** der erste Steg eine Ausdehnung in Erstreckungsrichtung des ersten und zweiten Rands (8, 10) aufweist, welche geringer ist als die Ausdehnung des zweiten Stegs in Erstreckungsrichtung des ersten und zweiten Rands (8, 10) und/oder dass der erste Steg eine Dicke in Richtung senkrecht zur Werkstückauflage (2) aufweist, welche geringer ist als die Dicke des zweiten Stegs und/oder des Werkstücks (100) in Richtung senkrecht zur Werkstückauflage (2).

6. Verfahren nach einem der vorhergehenden Ansprüche, **dadurch gekennzeichnet, dass** der oder jeder Verbindungsabschnitt (9) als Kniegelenkhebel geformt wird, der wenigstens zwei, über einen Verbindungssteg (904) miteinander verbundene Brückenstege (903, 903') umfasst, welche sich entlang des ersten und zweiten Rands (8, 10) von jeweiligen ersten, vorzugsweise miteinander fluchtenden Brückenstegenden (9a) zu jeweiligen zweiten, vorzugsweise miteinander fluchtenden Brückenstegenden (9b) erstrecken, wobei sich an dem ersten Brückenstegende (9a) des Brückenstegs (903), der benachbart zum ersten Rand (8) ist, das erste Ende (901) des jeweiligen Verbindungsabschnitts (9) befindet und wobei sich an dem ersten Brückenstegende (9a) des Brückenstegs (903'), der benachbart zum zweiten Rand (10) ist, das zweite Ende (902) des jeweiligen Verbindungsabschnitts (9) befindet.

7. Verfahren nach Anspruch 6, **dadurch gekennzeichnet, dass** ein jeweiliger Verbindungsabschnitt (9) ausschließlich zwei Brückenstege (903, 903') umfasst.

8. Verfahren nach Anspruch 6 oder 7, **dadurch gekennzeichnet, dass** die Brückenstege (903) jeweils eine Länge in Erstreckungsrichtung des ersten und zweiten Rands (8, 10) aufweisen, welche der Dicke des Werkstücks (100) in Richtung senkrecht zur Werkstückauflage (2) multipliziert mit einem Faktor zwischen 1 und 20 entspricht, und/oder dass die Brückenstege (903) jeweils eine Breite in Richtung senkrecht zur Erstreckungsrichtung des ersten und zweiten Rands (8, 10) aufweisen, welche der Dicke des Werkstücks (100) in Richtung senkrecht zur Werkstückauflage (2) multipliziert mit einem Faktor zwischen 0,1 und 5 entspricht.

9. Verfahren nach einem der Ansprüche 1 bis 5, **dadurch gekennzeichnet, dass** der oder jeder Verbindungsabschnitt (9) als einfacher Gelenkhebel geformt wird, der einen einzelnen Brückensteg (903) umfasst, welcher sich entlang des ersten und zweiten Rands (8, 10) von einem ersten Brückenstegende (9a) benachbart zum ersten Rand (8) zu einem zweiten Brückenstegende (9b) benachbart zum zweiten Rand (10) erstreckt, wobei sich an dem ersten Brückenstegende (9a) das erste Ende (901) des jeweiligen Verbindungsabschnitts (9) befindet und wobei sich an dem zweiten Brückenstegende (9b) das zweite Ende (902) des jeweiligen Verbindungsabschnitts (9) befindet.

10. Verfahren nach einem der vorhergehenden Ansprüche, **dadurch gekennzeichnet, dass** das jeweilige Werkstückteil (101) über einen einzelnen Verbindungsabschnitt (9) am Restwerkstück (102) gehalten wird, wobei der Schneidstrahl (LS) in einem kontinuierlichen Schneidvorgang zunächst einen Teil der Kontur des Verbindungsabschnitts (9), anschließend die Kontur des jeweiligen Werkstückteils (101) und darauffolgend die verbleibende Kontur des Verbindungsabschnitt (9) schneidet.

11. Verfahren nach einem der vorhergehenden Ansprüche, **dadurch gekennzeichnet, dass** der jeweilige Verbindungsabschnitt (9) freigeschnitten wird, so dass Bereiche des Werkstücks (100) in der Umgebung des jeweiligen Verbindungsabschnitts (9) entfernt werden.

12. Verfahren nach einem der vorhergehenden Ansprüche, **dadurch gekennzeichnet, dass** das jeweilige Werkstückteil (101) mittels eines automatisierten Greifers (11) gegriffen wird, der anschließend eine Relativbewegung des jeweiligen Werkstückteils (101) zum Restwerkstück (102) ausführt, welche eine Bewegung zum Anheben des jeweiligen Werkstückteils (101) relativ zum Restwerkstück (102) enthält und zum Bruch des oder der Verbindungsabschnitte (9) des jeweiligen Werkstückteils (101) an dem ersten Ende (901) führt, wobei der automatisierte Greifer (11) nach dem Bruch des oder der Verbindungsabschnitte (9) des jeweiligen Werkstückteils (101) an dem ersten Ende (901) das jeweilige Werkstückteil (101) absortiert.

13. Verfahren nach Anspruch 12, **dadurch gekennzeichnet, dass** mit einer Detektionseinrichtung (12) der Bruch des oder der Verbindungsabschnitte (9) des jeweiligen Werkstückteils (101) an dem ersten Ende (901) detektiert wird, woraufhin der Greifer (11) das jeweilige Werkstückteil (101) absortiert.

14. Verfahren nach Anspruch 13, **dadurch gekennzeichnet, dass** die Detektionseinrichtung (12) den Bruch des oder der Verbindungsabschnitte (9) des jeweiligen Werkstückteils (101) an dem ersten Ende (901) über eine Messung eines elektrischen Stroms oder einer elektrischen Spannung zwischen dem jeweiligen Werkstückteil (101) und dem Restwerkstück (102) und/oder über eine Kraftmessung am automatisierten Greifer (11) und/oder über eine kapazitive Messung und/oder über eine induktive Messung und/oder über eine optische Messung detektiert.

15. Vorrichtung zum Bearbeiten eines Werkstücks (100) mittels des Schneidstrahls (LS), vorzugsweise eines Laserstrahls, wobei die Vorrichtung (1) einen Schneidkopf (6) zur Formung des Schneidstrahls (LS) umfasst, um das Werkstück (100) auf einer Werkstückauflage (2) mittels des Schneidstrahls (LS) zu schneiden, **dadurch gekennzeichnet, dass** die Vorrichtung zur Durchführung eines Verfahrens nach einem der vorhergehenden Ansprüche eingerichtet ist.
